# EUROPÄISCHE PATENTSCHRIFT

(11) **EP 3 739 863 B1**
(45) Veröffentlichungstag und Bekanntmachung des Hinweises auf die Patenterteilung: **16.02.2022**
(21) Anmeldenummer: 19175201.3
(22) Anmeldetag: 17.05.2019
(51) Int. Cl.: H04N 5/217, H04N 7/18

(54) **VERFAHREN FÜR DEN BETRIEB EINER TÜRKOMMUNIKATIONSANLAGE**
METHOD FOR OPERATING A DOOR COMMUNICATION SYSTEM
PROCÉDÉ DE FONCTIONNEMENT D'UNE INSTALLATION DE COMMUNICATION DE PORTE

(43) Veröffentlichungstag der Anmeldung: 18.11.2020
(73) Patentinhaber: GIRA GIERSIEPEN GmbH & Co. KG, 42477 Radevormwald (DE)
(72) Erfinder: Schimmelpfennig, Frank, 42477 Radevormwald (DE); Fromm-Wittenberg, Markus, 42477 Radevormwald (DE)
(74) Vertreter: Angerhausen, Christoph

(56) Entgegenhaltungen:
- DE-A1-102008 017 638
- JP-A- 2003 219 396
- JP-A- 2007 336 272

## Beschreibung

Die Erfindung geht aus von einem Verfahren für den Betrieb einer Türkommunikationsanlage, bei dem beispielsweise durch eine Benutzereingabe an einer Türstation der Türkommunikationsanlage eine Anfrage für den Aufbau einer visuellen Kommunikationsverbindung zwischen der Türstation und mindestens einer Wohnungsstation der Türkommunikationsanlage erzeugt und mindestens ein Bild mit einer Kamera der Türstation aufgenommen wird. Das Verfahren weist weiterhin einen Überprüfungsschritt auf, bei dem das mindestens eine von der Türstation aufgenommene Bild auf das Vorliegen mindestens eines Bildfehlers in dem Bild überprüft wird. Wenn bei dem Überprüfen ein Bildfehler in dem überprüften Bild festgestellt wird, wird das den Bildfehler aufweisende Bild als fehlerhaft bestimmt. Ein derartiges Verfahren ist aus der EP 2 536 127 A2 bekannt.

Druckschrift JP 2003 219396 A lehrt ein Verfahren, mit dem ein von einer Kamera aufgenommenes, sich bewegendes bestimmtes Objekt, z.B. das Gesicht eines Besuchers, stets mit hoher Videoqualität auf einem Bildschirm angezeigt werden kann. Dazu wird ein feature tracking des Objekts anhand des von der Kamera aufgenommenen Videos durchgeführt und der Bildausschnitt des Videos lokal um das Objekt herum mit einer verglichen mit dem Rest des Bildes höheren Qualität encodiert.

Dieses Verfahren kann auch auf einem Server, zu dem alle von der Kamera aufgenommen Bilder übertragen werden, durchgeführt werden. Die Kamera kann in einer Türkommunikationsvorrichtung angeordnet sein.

Die aus dem Stand der Technik bekannten Türkommunikationsanlagen, häufig auch Türsprechanlagen genannt, weisen jeweils mindestens eine Türstation mit einer Kamera sowie mindestens eine Wohnungsstation auf, die das von der Kamera aufgenommene Bild einer sich vor einer Tür eines Gebäudes befindlichen Person auf einem Display abbilden kann. Verbreitet sind Türkommunikationsanlagen, die einen Bildspeicher aufweisen und es ermöglichen, dass der Bewohner einer Gebäudeeinheit sich anschauen kann, wer während seiner Abwesenheit per Türruf mit ihm Kontakt aufnehmen wollte. Je nach Installationsort der Kamera, Umgebungsbedingungen und Witterungsverhältnissen, wie Position des Besuchers relativ zu der Türstation, Gegenlicht, Dunkelheit, Schneefall und dergleichen, kann es vorkommen, dass die von der Kamera erzielbare Bildqualität nicht ausreicht, um zu erkennen, wer der Besucher war, der während der Abwesenheit des Wohnungsinhabers Kontakt mit ihm aufnehmen wollte.

Zur Lösung dieser Problematik schlägt die EP 2 536 127 A2 ein Verfahren zur bildbasierten automatischen Belichtungskorrektur einer Türkommunikationsanlage vor, bei der das mit Hilfe der Kamera der Türstation aufgenommene Bild eine Belichtungskorrektur erfährt, wozu die Türstation einen Lichtsensor sowie alle für die Bildverarbeitung erforderlichen hardwareseitigen und softwareseitigen Voraussetzungen erfüllt.

Es hat sich herausgestellt, dass die mit Hilfe gängiger Türkommunikationsanlagen realisierbare Bildnachbearbeitung gehobenen Anforderungen nicht genügt und häufig lediglich auf technische einfach umsetzbare Maßnahmen wie die Belichtungskorrektur beschränkt ist. Darüber hinausgehende Bildbearbeitungen, wie etwa die Korrektur chromatischer Aberration, Kontrastanpassungen, Ausschnittsvergrößerungen, Nachbearbeitungen der Bildschärfe und dergleichen sind mit Hilfe der aus dem Stand der Technik bekannten Türkommunikationsanlagen nicht realisierbar, was häufig dadurch bedingt ist, dass die türkommunikationsanlagenseitige Hardware und Software diesbezüglich nicht leistungsstark ausgelegt ist.

Es ist daher die Aufgabe der Erfindung, ein Verfahren für den Betrieb einer Türkommunikationsanlage der eingangs beschriebenen Art derart weiterzuentwickeln, dass es die Erzeugung qualitativ hochwertiger Bilder ermöglicht, die auch bei schwierigen Randbedingungen noch eine hinreichende Bildqualität aufweisen.

Diese Aufgabe wird durch ein Verfahren mit den Merkmalen des Anspruchs 1 gelöst. Die abhängigen Ansprüche betreffen jeweils vorteilhafte Ausführungsformen der Erfindung.

Demgemäß ist vorgesehen, dass das Verfahren das Übertragen des als fehlerhaft bestimmten Bildes an einen Bildkorrekturserver aufweist, der außerhalb der Türkommunikationsanlage angeordnet ist. Durch den Bildkorrekturserver soll mindestens eine Bildkorrektur an dem mindestens einen als fehlerhaft bestimmten Bild durchgeführt werden, wobei ein korrigiertes Bild erhalten wird. Schließlich soll das korrigierte Bild von dem Bildkorrekturserver an einen Speicher der Türkommunikationsanlage übertragen werden. Aus dem Speicher kann das korrigierte Bild dann über die Türstation abgerufen und beispielsweise auf einem Display der Türstation angezeigt werden.

Es kann vorgesehen sein, dass die Türkommunikationsanlage, beispielsweise die Türstation dieser, dazu eingerichtet ist, mit Hilfe gängiger Bildverbesserungsalgorithmen festzustellen, ob ein von der Türstation aufgenommenes Bild oder eine Videosequenz mangelhaft oder korrekturbedürftige Bildparameter aufweist, beispielsweise eine mangelnde Bildschärfe, einen mangelnden Kontrast, eine unvorteilhafte Anordnung der abzubildenden Person im Bildfeld oder dergleichen.

Die Türkommunikationsanlage kann weiterhin dazu eingerichtet sein, zu entscheiden, ob ein aufgenommenes Bild, eine aufgenommene Bildsequenz oder ein aufgenommenes Video an den Bildkorrekturserver zur Bildkorrektur weitergeleitet oder bereits eine ausreichende Bildqualität aufweist und von daher ohne Bildkorrektur im Speicher der Türkommunikationsanlage für den späteren Abruf über die Wohnungsstation bereitgestellt wird.

Die Idee der Erfindung liegt darin, die für die oben beschriebenen Bildkorrekturen erforderliche Rechenleistung außerhalb der Türkommunikationsanlage zur Verfügung zu stellen, so dass es nicht erforderlich ist, die Türkommunikationsanlage selbst entsprechend aufzurüsten, wodurch diese technisch viel zu aufwendig und damit kostenintensiv in der Realisierung würde.

Soweit in der vorliegenden Patentanmeldung von einem "Bild" gesprochen wird, so kann damit auch immer eine Bildsequenz oder ein Video neben dem einzelnen Bild gemeint sein, so dass die Prinzipien der vorliegenden Erfindung nicht nur auf die Korrektur einzelner Bilder sondern auch auf Bildsequenzen und Videos anwendbar sind.

Das Übertragen des korrigierten Bildes von dem Bildkorrekturserver an einen Speicher der Türkommunikationsanlage kann insbesondere derart implementiert sein, dass das korrigierte Bild an einen Speicher der Wohnungsstation übertragen wird. Die Türkommunikationsanlage kann auch Bestandteil eines Gebäudenetzwerkes sein, so dass der Speicher beispielsweise als Bestandteil eines Gebäudenetzwerksservers, beispielsweise als ein KNX-Server realisiert ist.

Der Bildkorrekturserver kann beispielsweise als ein Cloud-Server ausgebildet sein, an den die Türkommunikationsanlage über eine IP-Schnittstelle angeschlossen ist. Demgemäß kann das Übertragen des als fehlerhaft bestimmten Bildes an einen Bildkorrekturserver das Übertragen des als fehlerhaft bestimmten Bildes an einen Cloud-Server aufweisen, der über eine IP-Schnittstelle an die Türkommunikationsanlage für die Datenübertragung angeschlossen ist.

Das Aufbauen der visuellen Kommunikationsverbindung kann das Speichern des von der Türstation aufgenommenen Bildes in einem Speicher der Türkommunikationsanlage und insbesondere der Wohnungsstation zu einem ersten Zeitpunkt und das Übertragen des Bildes von dem Speicher an die Wohnungsstation zu einem zweiten Zeitpunkt aufweisen. Dabei kann insbesondere vorgesehen sein, dass nach dem ersten und vor dem zweiten Zeitpunkt das Überprüfen des mindestens einen von der Türstation aufgenommenen Bildes durchgeführt wird, wobei ein gegebenenfalls als fehlerhaft bestimmtes Bild von dem Speicher an den Bildkorrekturserver für die Durchführung der mindestens einen Bildkorrektur übertragen wird.

Weiterhin kann vorgesehen sein, dass noch vor dem zweiten Zeitpunkt das korrigierte Bild von dem Bildkorrekturserver an den Speicher der Türkommunikationsanlage übertragen wird.

Das Übertragen des als fehlerhaft bestimmten Bildes an den Bildkorrekturserver kann das Erzeugen eines Duplikats des als fehlerhaft bestimmten Bildes aufweisen, das in einem Speicher der Türkommunikationsanlage hinterlegt wird. Das Duplikat kann auf dem Speicher nach dem Übertragen des korrigierten Bildes an den Speicher durch das korrigierte Bild ersetzt werden.

Das Durchführen der mindestens einen Bildkorrektur kann das Ermitteln mindestens einer Position eines auf dem von der Türstation aufgenommenen Bild abgebildeten Objekts sowie das Ermitteln einer Abweichung der Position von einer Sollposition aufweisen. Die Sollposition kann beispielsweise das Bildzentrum sein. Das Verfahren kann weiterhin das Nachführen der Position des Objekts auf dem Bild unter Ausgleich der Abweichung aufweisen, so dass das Objekt die Sollposition einnimmt, vorzugsweise auf dem Bild zentriert abgebildet wird.

Das Durchführen der mindestens einen Bildkorrektur kann das Ermitteln einer Über-oder Unterbelichtung des Bildes, eines Kontrastverlustes oder einer chromatischen Aberration aufweisen, sowie das Durchführen einer Belichtungskorrektur, einer Kontrasterhöhung oder einer chromatischen Korrektur. Das Durchführen der Bildkorrektur ist jedoch nicht auf die zuvor beschriebenen Korrekturmaßnahmen beschränkt und kann grundsätzlich auf sämtliche der aus dem Stand der Technik grundsätzlich bekannten softwareimplementierten Korrekturmöglichkeiten bedarfsweise erweitert werden. Bei den zuvor explizit genannten Korrekturmöglichkeiten hat sich jedoch herausgestellt, dass diese bei der Umsetzung im Rahmen einer visuellen Kommunikation über eine Türkommunikationsanlage das bildverarbeitende System hinsichtlich seiner Rechenleistung und Speicherkapazität erheblich beanspruchen, so dass befriedigende Ergebnisse mit Hilfe der aus dem Stand der Technik bekannten Türkommunikationsanlagen bisher nicht möglich waren. Erst durch die erfindungsgemäße Auslagerung dieser Bildkorrekturschritte auf einen Bildkorrekturserver, der außerhalb der Türkommunikationsanlage implementiert ist, kann die erforderliche Rechenleistung und Speicherkapazität zur Verfügung gestellt werden.

Das von der Türstation aufgenommene Bild kann reversibel verfremdet und als verfremdetes Bild in einem Speicher der Türkommunikationsanlage hinterlegt werden. Auch dieser Verfremdungsschritt kann nach dem Übertragen des Bildes an den Bildkorrekturserver durch den Bildkorrekturserver ausgeführt werden.

Das Verfremden des Bildes kann das Erfassen einer auf dem Bild abgebildeten Person und das reversible Verfremden eines die Person abbildenden Bereichs des Bildes aufweisen.

Das Verfremden des Bildes kann das Erfassen mindestens eines Bildbereichs aufweisen, in dem keine Person abgebildet ist. Dabei kann vorgesehen sein, dass der erfasste Bildbereich, in dem keine Person abgebildet ist, bei dem Verfremden unverfremdet bleibt. Auch mit Hilfe dieser Maßnahme kann Rechen- und Speicherkapazität eingespart werden.

Das Verfremden des die Person abbildenden Bereichs kann das reversible Überlagern dieses Bildbereichs mit einem Ersatzbild, beispielsweise mit einem Avatar aufweisen.

Das Verfahren kann weiterhin einen Autorisierungsschritt aufweisen, infolge welches das reversibel verfremdete Bild in einen unverfremdeten Zustand versetzt und auf der Türstation angezeigt oder in dem Speicher der Türkommunikationsanlage als unverfremdetes Bild für den Zugriff über die Türstation hinterlegt wird.

Es kann beispielsweise vorgesehen sein, dass nach der Aufnahme des Bildes, der Bildsequenz oder des Videos durch die Türstation unmittelbar das Bild, die Bildsequenz oder das Video als Original in einem Speicher der Türkommunikationsanlage hinterlegt wird, anschließend oder zeitgleich das Original an den Bildkorrekturserver für die Bildkorrektur übersandt und nach erfolgter Bildkorrektur das korrigierte Bild beziehungsweise die korrigierte Bildsequenz oder das korrigierte Video als Ersatz für das Original oder als Duplikat in dem Speicher der Türkommunikationsanlage abgelegt wird, so dass in dem Fall, dass neben dem korrigierten Bild auch das Original in dem Speicher der Türkommunikationsanlage hinterlegt ist, über die Wohnungsstation zu Vergleichszwecken neben dem korrigierten Bild auch auf das Original zugegriffen werden kann.

Das reversible Verfremden des von der Türstation aufgenommenen Bildes, der Bildsequenz oder des Videos kann das Übertragen des von der Türstation aufgenommenen Bildes, der Bildsequenz oder des Videos an den Bildkorrekturserver, das Verfremden dieses durch den Bildkorrekturserver und das Zurückübertragen des verfremdeten Bildes, der verfremdeten Bildsequenz oder des verfremdeten Videos an die Türkommunikationsanlage aufweisen.

Weiterhin kann das Aufbauen einer visuellen Kommunikationsverbindung das Ausgeben einer Identifizierungsanfrage über eine Ausgabe, vorzugsweise ein Display der Türstation aufweisen. Die Identifizierungsanfrage kann beispielsweise gleichzeitig mit oder zeitverzögert zu einer über die Türstation eingegebenen Rufaufbauanfrage ausgelöst werden.

So kann beispielsweise ein Besucher einer Immobilie, der mit der Türstation interagiert, aufgefordert werden, sich zu identifizieren und beispielsweise seinen Namen in die Türstation einzugeben, so dass über die Türkommunikationsanlage eine Zuordnung von aufgenommenen Bild und weiterer, beispielsweise schriftlicher Information, möglich ist. Je nach rechtlichen Rahmenbedingungen kann auch denkbar sein, dass über die Türstation ein Besucher der Immobilie aufgefordert wird, eine Freigabe zu erteilen, dass sein Gesicht abgebildet und ein entsprechendes Bild in dem Speicher der Anlage hinterlegt oder für die Nachbearbeitung an einen externen Bildkorrekturserver weitergeleitet wird.

Die vorliegende Erfindung ermöglicht nicht nur die qualitative Verbesserung der Bilddarstellung unter ungünstigen Umgebungsbedingungen, sondern sie erlaubt auch Ausführungsformen, bei denen die Anlage so parametrisierbar ist, das datenschutzrechtliche Vorgaben trotz Einsatz einer Kamera eingehalten werden können.

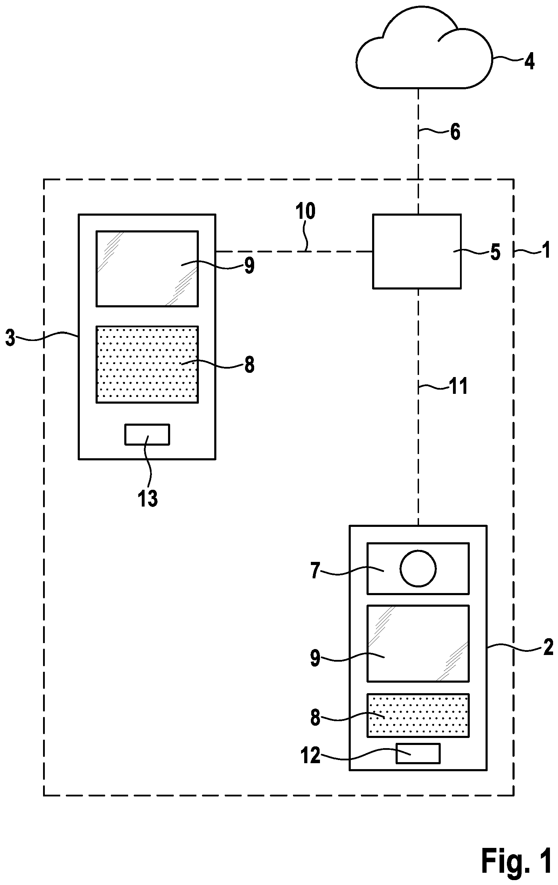

Weitere Einzelheiten der Erfindung werden anhand der nachstehenden Figur 1 erläutert. Sie zeigt in schematischer Darstellung eine beispielhafte Ausführungsform einer Türkommunikationsanlage, die gemäß dem erfindungsgemäßen Verfahren betrieben werden kann.

Demgemäß weist die Türkommunikationsanlage 1 neben mindestens einer Türstation 2 und mindestens einer Wohnungsstation 3 einen Speicher 5 auf, über den die Wohnungsstation 3 über eine erste Datenschnittstelle 10 und die Türstation 2 über eine zweite Datenschnittstelle 11 zugreifen kann. Der Speicher 5 kann auch in der Türstation 2 oder in der Wohnungsstation 3 aufgenommen sein. Insbesondere bei Türkommunikationsanlagen für größere Immobilien, die eine Vielzahl Wohnungsstationen 3 aufweist, kann vorgesehen sein, dass je Wohnungsstation 3 ein eigener Speicher 5 in die Wohnungsstation 3 implementiert ist, in dem lediglich die Wohneinheit, in welcher die betreffende Wohnungsstation 3 installiert ist, betreffende Bilder und gegebenenfalls weitere Betriebsdaten der Anlage hinterlegt sind.

Die Türstation 2 und die Wohnungsstation 3 sind, wie in Figur 1 darstellt ist, mittelbar über den Speicher 5 mit einem außerhalb der Türkommunikationsanlage 1 angeordneten Bildkorrekturserver 4 verbunden, der vorliegend als Cloud-Server ausgebildet ist. Dazu ist der Speicher 5 über eine IP-Schnittstelle mit dem Bildkorrekturserver 4 verbunden. Der Speicher 5 kann beispielsweise auch Bestandteil eines Servers der Türkommunikationsanlage 1 sein, so dass die IP-Schnittstelle zwischen dem den Speicher 5 aufweisenden Server und dem Cloud-Server 4 aufgebaut ist. Der Speicher 5 kann beispielsweise auch Bestandteil der Türstation 2 der Türkommunikationsanlage 1 sein, so dass die IP-Schnittstelle zwischen der den Speicher 5 aufweisenden Türstation 2 und dem Cloud-Server 4 aufgebaut ist.

Die Türstation 2 und die Wohnungsstation 3 weisen jeweils eine Lautsprecher-/ Mikrofoneinheit 8 und ein Display 9 auf. Darüber hinaus weist die Türstation 2 eine Kamera 7 und einen Ruftaster 12 für die Anforderung eines Rufaufbaus zu der Wohnungsstation 3 auf. Die Wohnungsstation 3 weist einen Rufannahmetaster 13 auf. Die Displays 9 können beispielsweise als berührungssensitive Displays ausgebildet werden, um eine Interaktion mit der Türstation beziehungsweise der Wohnungsstation 3 zu ermöglichen. Darüber hinaus können die Stationen 2, 3 zusätzliche elektromechanische Taster für die Interaktion mit dem jeweiligen Gerät 2, 3 aufweisen. Es kann nun vorgesehen sein, dass durch Betätigung des Ruftasters 12 der Türstation 2 eine visuelle und vorzugsweise eine audiovisuelle Kommunikationsverbindung zwischen der Türstation 2 und der Wohnungsstation 3 der Türkommunikationsanlage 1 angefragt wird. Dies bedeutet nicht zwangsläufig, dass unmittelbar danach ein über die Kamera 7 der Türstation 2 aufgenommenes Bild auf dem Display 9 der Wohnungsstation 3 angezeigt wird. Beispielsweise soll erfindungsgemäß insbesondere der Anwendungsfall abgedeckt werden, dass die Wohnungsstation 3 von keinem Benutzer bedient wird, weil dieser z. B. abwesend ist. Der Aufbau der visuellen oder audiovisuellen Kommunikationsverbindung zwischen der Türstation 2 und der Wohnungsstation 3 kann dabei von einer Betätigung des Rufannahmetasters 13 der Wohnungsstation 3 anhängen und beispielsweise auch erst infolge dessen dazu führen, dass über das Display 9 ein von der Kamera 7 aufgenommenes Bild angezeigt und über die jeweilige Lautsprecher-/Mikrofoneinheiten 8 von Türstation 2 und Wohnungsstation 3 eine Sprachverbindung aufgebaut wird.

Stattdessen soll das erfindungsgemäße Verfahren für diejenigen Fälle vorbereitet sein, bei denen infolge einer Interaktion einer vor der Türstation 2 stehenden Person mit der Türstation 2 ein für die Anzeige auf einer bestimmten Wohnungsstation 3 vorgesehenes Bild, eine vorgesehene Bildsequenz oder ein Video aufgenommen und für die spätere Darstellung auf dem Display 9 der Wohnungsstation 3 beispielsweise in dem Speicher 5 hinterlegt wird, woraufhin beispielsweise abhängig von einem vorgefundenen Bildfehler entschieden werden kann, ob das Bild, die Bildsequenz oder das Video für die Bildkorrektur an den externen Server 4 übertragen wird.

Nachdem das in dem Speicher 5 hinterlegte Bild als korrekturbedürftig erfasst worden ist, wozu die Türkommunikationsanlage 1 selbst entsprechende Bilderkennungsalgorithmen aufweisen kann, kann das korrekturbedürftige Bild über die IP-Schnittstelle 6 an den Bildkorrekturserver 4 für die Bildverarbeitung weitergeleitet werden. Die Bildkorrektur kann beispielsweise das Durchführen einer Belichtungskorrektur, einer Kontrasterhöhung oder die Korrektur einer chromatischen Aberration aufweisen, ist jedoch nicht auf derartige Korrekturmaßnahmen beschränkt.

Es kann somit ein Verfahren für den Betrieb einer Türkommunikationsanlage 1 erreicht werden, bei dem durch Bildverbesserungsalgorithmen zunächst aufgenommene Bilder oder Videosequenzen analysiert werden, um festzustellen, welche Bildparameter mangelhaft sind, so dass diese gegebenenfalls im Anschluss durch die Anwendung geeigneter Bildkorrekturmaßnahmen, gegebenenfalls auch unter Anwendung von Algorithmen der KI, so weit verbessert werden, dass der Bewohner einer Wohneinheit 3 bei einem späteren Abruf des Bildes in die Lage versetzt wird, mit höherer Wahrscheinlichkeit zu erkennen, welcher Besucher während seiner Abwesenheit über die Türkommunikationsanlage 1 mit ihm Kontakt aufnehmen wollte.

Da für die Bildkorrekturen massive Rechenleistung und Speicherkapazität erforderlich sein kann, ist vorgesehen, dass die Bildkorrekturen nicht innerhalb der Türkommunikationsanlage 1 selbst durchgeführt werden, sondern die Bilddaten zunächst an einen dafür ausgestatteten Cloud-Server 4 übertragen, dort verbessert und anschließend an die Türkommunikationsanlage 1 zurückübertragen werden, wo die korrigierten Bilder in einem Speicher 5 für den späteren Zugriff über die Wohnungseinheit abgelegt werden können.

Die Bildkorrekturen können beispielsweise auch die Position und Größe eines Gesichts des Besuchers auf dem aufgenommenen Bild betreffen. Dazu kann beispielsweise die Position und/oder die Größe des Gesichts im Ausgangsbild ermittelt werden. Es kann vorgesehen sein, dass das Gesicht anschließend vergrößert und gegebenenfalls zentriert wird. Bei Nachtaufnahmen oder anderweitigen Aufnahmen mit schwierige Belichtungsbedingungen, beispielsweise bei Gegenlichtsituationen und bei herabgesetztem Kontrast, kann vorgesehen sein, dass entsprechende Belichtungskorrekturen, Kontrasterhöhungen oder auch aus monochromen Nachtaufnahmen farbige Abbildungen erzeugt werden. Die zuvor beschriebenen Bildkorrekturmaßnahmen sind nicht abschließend und können insbesondere um diejenigen Maßnahmen aus dem Stand der Technik ergänzt werden, die geeignet sind, eine bessere Erkennbarkeit einer vor der Türstation stehenden Person zu erreichen.

Als Variante, welche nicht in den Schutzbereich der Ansprüche fällt aber nützlich zum Verständnis der Erfindung ist, kann vorgesehen sein, dass unmittelbar nach der Aufnahme des Besuchers über die Türstation das Originalbild in dem Speicher 5 der Türkommunikationsanlage 1 abgelegt wird, danach das Originalbild an den externen Bildkorrekturserver übertragen und nach erfolgter Bildkorrektur als korrigiertes Bild in dem Speicher 5 der Türkommunikationsanlage hinterlegt wird. Dabei kann vorgesehen sein, dass vor dem Übertragen des von der Türstation aufgenommenen Bildes an den externen Korrekturserver ein Duplikat des Bildes erzeugt und auf dem Speicher der Türkommunikationsanlage hinterlegt wird. Bei dem Rückübersenden des korrigierten Bilds von dem Bildkorrekturserver 4 an die Türkommunikationsanlage 1 kann vorgesehen sein, dass das korrigierte Bild das Originalbild ersetzt oder zusätzlich zu diesem für den wahlweisen Zugriff über die Wohnungsstation 3 hinterlegt wird.

Es kann weiterhin vorgesehen sein, dass im Rahmen der Bildkorrektur oder auch unabhängig davon eine Verfremdung des aufgenommenen Bildes durchgeführt wird und lediglich das verfremdete Bild in dem Speicher 5 der Türkommunikationsanlage 1 hinterlegt wird. Dies kann insbesondere vorgesehen sein, um den Anforderungen des Datenschutzes zu genügen. Bei dieser Ausführungsform kann ergänzend vorgesehen sein, dass über die Türstation 2 ein Benutzer der Türstation 2 aufgefordert wird, eine Autorisierung der Klardarstellung seines Gesichts abzugeben. Bedarfsweise kann der Benutzer aufgefordert werden, ergänzende schriftliche Informationen über die Türstation einzugeben, die dann mit seinem Bild verknüpft werden. Beispielsweise kann er aufgefordert werden, seinen Namen einzugeben. Das Verfremden des aufgenommenen Bildes kann das Ersetzen eines Gesichts der aufgenommenen Person durch einen Avatar aufweisen.

### Bezugszeichenliste

- 1: Türkommunikationsanlage
- 2: Türstation
- 3: Wohnungsstation
- 4: Bildkorrekturserver
- 5: Speicher
- 6: IP-Schnittstelle
- 7: Kamera
- 8: Lautsprecher-/Mikrofoneinheit
- 9: Display
- 10: erste Datenschnittstelle
- 11: zweite Datenschnittstelle
- 12: Ruftaster
- 13: Rufannahmetaster

## Patentansprüche

1. Verfahren für den Betrieb einer Türkommunikationsanlage (1), das die Schritte aufweist:
a. Erzeugen einer Anfrage für den Aufbau einer visuellen Kommunikationsverbindung zwischen einer Türstation (2) und mindestens einer Wohnungsstation (3) der Türkommunikationsanlage (1), wobei mindestens ein Bild mit einer Kamera (7) der Türstation (2) aufgenommen wird;
b. Überprüfen des mindestens einen von der Türstation (2) aufgenommenen Bildes auf das Vorliegen mindestens eines Bildfehlers in dem Bild, wobei ein einen Bildfehler aufweisendes Bild als fehlerhaft bestimmt wird;
**gekennzeichnet durch**
c. Übertragen des als fehlerhaft bestimmten Bildes an einen Bildkorrekturserver (4), der außerhalb der Türkommunikationsanlage (1) angeordnet ist;
d. Durchführen mindestens einer Bildkorrektur durch den Bildkorrekturserver (4) an dem mindestens einen als fehlerhaft bestimmten Bild, wobei ein korrigiertes Bild erhalten wird; und
e. Übertragen des korrigierten Bildes von dem Bildkorrekturserver (4) an einen Speicher (5) der Türkommunikationsanlage (1).

2. Verfahren nach Anspruch 1, bei dem das Übertragen des korrigierten Bildes das Übertragen des korrigierten Bildes an einen Speicher (5) der Wohnungsstation (3) aufweist.

3. Verfahren nach Anspruch 1 oder 2, bei dem das Übertragen des als fehlerhaft bestimmten Bildes an einen Bildkorrekturserver (4) das Übertragen des als fehlerhaft bestimmten Bildes an einen Cloud-Server ist, der über eine IP-Schnittstelle (6) an die Türkommunikationsanlage (1) für die Datenübertragung angeschlossen ist.

4. Verfahren nach einem der vorangegangen Ansprüche, bei dem das Aufnehmen des mindestens einen Bildes das Speichern des aufgenommenen Bildes in einem Speicher (5) der Türkommunikationsanlage (1) zu einem ersten Zeitpunkt und das Übertragen des Bildes von dem Speicher (5) an die Wohnungsstation (3) zu einem zweiten Zeitpunkt aufweist.

5. Verfahren nach Anspruch 4, bei dem nach dem ersten und vor dem zweiten Zeitpunkt das Überprüfen des mindestens einen von der Türstation (2) aufgenommenen Bildes durchgeführt wird, wobei ein als fehlerhaft bestimmtes Bild von dem Speicher (5) an den Bildkorrekturserver (4) für die Durchführung der mindestens einen Bildkorrektur übertragen wird.

6. Verfahren nach Anspruch 5, bei dem noch vor dem zweiten Zeitpunkt das korrigierte Bild von dem Bildkorrekturserver (4) an den Speicher (5) der Türkommunikationsanlage (1) übertragen wird.

7. Verfahren nach einem der vorangegangenen Ansprüche, bei dem das Übertragen des als fehlerhaft bestimmten Bildes an einen Bildkorrekturserver (4) das Erzeugen eines Duplikats des als fehlerhaft bestimmten Bildes aufweist, das in einem Speicher (5) der Türkommunikationsanlage (1) hinterlegt wird, wobei das Duplikat auf dem Speicher (5) nach dem Übertragen des korrigierten Bildes an den Speicher (5) durch das korrigierte Bild ersetzt wird.

8. Verfahren nach einem der vorangegangenen Ansprüche, bei dem das Durchführen mindestens einer Bildkorrektur aufweist:
a. Ermitteln mindestens einer Position eines auf dem von der Türstation (2) aufgenommenen Bild abgebildeten Objekts;
b. Ermitteln einer Abweichung der Position von einer Sollposition, vorzugsweise von einem Bildzentrum; und
c. Nachführen der Position des Objekts auf dem Bild unter Ausgleich der Abweichung, so dass das Objekt die Sollposition einnimmt und vorzugsweise auf dem Bild zentriert ist.

9. Verfahren nach einem der vorangegangenen Ansprüche, bei dem das Durchführen mindestens einer Bildkorrektur das Ermitteln einer Über- oder Unterbelichtung des Bildes, eines Kontrastverlustes oder einer chromatischen Aberration und Durchführen einer Belichtungskorrektur, einer Kontrasterhöhung oder einer chromatischen Korrektur.

10. Verfahren nach einem der vorangegangenen Ansprüche, bei dem das von der Türstation (2) aufgenommene Bild nach dem Übertragen von dem Bildkorrekturserver (4) reversibel verfremdet und als verfremdetes Bild in einem Speicher (5) der Türkommunikationsanlage (1) hinterlegt wird.

11. Verfahren nach Anspruch 10, bei dem das Verfremden des Bildes das Erfassen einer auf dem Bild abgebildeten Person und das reversible Verfremden eines die Person abbildenden Bereichs des Bildes aufweist.

12. Verfahren nach Anspruch 10 oder 11, bei dem das Verfremden des Bildes das Erfassen mindestens eines Bildbereiches aufweist, in dem keine Person abgebildet ist, wobei dieser Bildbereich bei dem Verfremden unverfremdet bleibt.

13. Verfahren nach Anspruch 11 oder 12, bei dem das Verfremden des die Person abbildenden Bereichs das reversible Überlagern dieses Bereichs mit einem Ersatzbild, vorzugsweise mit einem Avatar, aufweist.

14. Verfahren nach einem der Ansprüche 10 bis 13, das einen Autorisierungsschritt aufweist, infolge welches das reversibel verfremdete Bild in einen unverfremdeten Zustand versetzt und auf der Türstation (2) angezeigt oder in dem Speicher (5) der Türkommunikationsanlage (1) als unverfremdetes Bild für den Zugriff über die Türstation (2) hinterlegt wird.

15. Verfahren nach einem der vorangegangenen Ansprüche, bei dem das reversible Verfremden des von der Türstation (2) aufgenommenen Bildes das Übertragen des von der Türstation (2) aufgenommenen Bildes an den Bildkorrekturserver (4), das Verfremden des Bildes durch den Bildkorrekturserver (4) und das Zurückübertragen des verfremdeten Bildes an die Türkommunikationsanlage (1) aufweist.

16. Verfahren nach einem der vorangegangenen Ansprüche, bei dem gleichzeitig mit oder zeitverzögert zu dem Erzeugen einer Anfrage für den Aufbau einer visuellen Kommunikationsverbindung eine Identifizierungsanfrage über eine Ausgabe, vorzugsweise ein Display (9), der Türstation (2) ausgegeben wird.

## Claims

1. A method of operating a door communication system (1) comprising the steps of:
a. Generating a request for establishing a visual communication link between a door station (2) and at least one home station (3) of the door communication system (1), wherein at least one image is captured with a camera (7) of the door station (2);
b. Checking the at least one image taken by the door station (2) for the presence of at least one image error in the image, wherein an image having an image error is determined to be defective;
**characterized by**
c. Transmitting the image determined to be defective to an image correction server (4) located outside the door communication system (1);
d. Performing at least one image correction by the image correction server (4) on the at least one image determined to be defective, thereby obtaining a corrected image; and
e. Transferring the corrected image from the image correction server (4) to a memory (5) of the door communication system (1).

2. The method of claim 1, wherein transmitting the corrected image comprises transmitting the corrected image to a memory (5) of the home station (3).

3. The method of claim 1 or 2, wherein transmitting the image determined to be defective to an image correction server (4) is transmitting the image determined to be defective to a cloud server connected via an IP interface (6) to the door communication system (1) for data transmission.

4. The method according to any one of the preceding claims, wherein capturing the at least one image comprises storing the captured image in a memory (5) of the door communication system (1) at a first time and transmitting the image from the memory (5) to the home station (3) at a second time.

5. The method according to claim 4, wherein after the first and before the second time, the checking of the at least one image taken by the door station (2) is performed, wherein an image determined to be defective is transferred from the memory (5) to the image correction server (4) for performing the at least one image correction.

6. The method according to claim 5, wherein even before the second instant, the corrected image is transmitted from the image correction server (4) to the memory (5) of the door communication system (1).

7. The method according to any one of the preceding claims, wherein transmitting the image determined to be defective to an image correction server (4) comprises generating a duplicate of the image determined to be defective which is stored in a memory (5) of the door communication system (1), the duplicate on the memory (5) being replaced by the corrected image after transmitting the corrected image to the memory (5).

8. The method of any one of the preceding claims, wherein performing at least one image correction comprises:
a. Determining at least one position of an object depicted on the image captured by the door station (2);
b. Determining a deviation of the position from a target position, preferably from an image center; and
c. Tracking the position of the object on the image while compensating for the deviation so that the object assumes the target position and is preferably centered on the image.

9. The method according to any one of the preceding claims, wherein performing at least one image correction comprises detecting an overexposure or underexposure of the image, a contrast loss or a chromatic aberration and performing an exposure correction, a contrast increase or a chromatic correction.

10. The method according to any one of the preceding claims, in which the image taken by the door station (2) is reversibly alienated by the image correction server (4) after transmission and is stored as an alienated image in a memory (5) of the door communication system (1).

11. The method of claim 10, wherein alienating the image comprises capturing a person depicted in the image and reversibly alienating a portion of the image depicting the person.

12. The method of claim 10 or 11, wherein alienating the image comprises capturing at least a portion of the image in which no person is depicted, said portion of the image remaining un-alienated during alienating.

13. The method according to claim 11 or 12, wherein alienating the area depicting the person comprises reversibly overlaying said area with a substitute image, preferably an avatar.

14. The method according to any one of claims 10 to 13, comprising an authorization step as a result of which the reversibly alienated image is put into an unalienated state and displayed on the door station (2) or stored in the memory (5) of the door communication system (1) as an unalienated image for access via the door station (2).

15. The method according to any one of the preceding claims, wherein reversibly alienating the image captured by the door station (2) comprises transmitting the image captured by the door station (2) to the image correction server (4), alienating the image by the image correction server (4), and transmitting the alienated image back to the door communication system (1).

16. The method according to any one of the preceding claims, wherein simultaneously with or time-delayed to the generation of a request for the establishment of a visual communication link, an identification request is issued via an output, preferably a display (9), of the door station (2).

## Revendications

1. Procédé pour le fonctionnement d'une installation de communication de porte (1), qui comprend les étapes suivantes :
a. envoi d'une demande d'établissement d'une liaison de communication visuelle entre une station de porte (2) et au moins une station d'habitation (3) de l'installation de communication de porte (1), dans lequel au moins une image est prise avec une caméra (7) de la station de porte (2) ;
b. vérification de l'au moins une image prise par la station de porte (2), afin de constater la présence d'au moins une erreur dans l'image, dans lequel une image présentant une erreur est considérée comme défectueuse ;
**caractérisé par**
c. la transmission de l'image considérée comme défectueuse à un serveur de correction d'image (4) qui se trouve à l'extérieur de l'installation de communication de porte (1) ;
d. la réalisation d'au moins une correction d'image par le serveur de correction d'image (4) sur l'au moins une image considérée comme défectueuse, dans lequel une image corrigée est obtenue ; et
e. la transmission de l'image corrigée par le serveur de correction d'image (4) à une mémoire (5) de l'installation de communication de porte (1).

2. Procédé selon la revendication 1, dans lequel la transmission de l'image corrigée comprend la transmission de l'image corrigée à une mémoire (5) de la station d'habitation (3).

3. Procédé selon la revendication 1 ou 2, dans lequel la transmission de l'image considérée comme défectueuse à un serveur de correction d'image (4) est la transmission de l'image considérée comme défectueuse à un serveur cloud, qui est connecté par l'intermédiaire d'une interface IP (6) à l'installation de communication de porte (1) pour la transmission de données.

4. Procédé selon l'une des revendications précédentes, dans lequel la prise de l'au moins une image comprend l'enregistrement de l'image prise dans une mémoire (5) de l'installation de communication de porte (1) dans un premier temps et la transmission de l'image par la mémoire (5) à la station d'habitation (3) dans un deuxième temps.

5. Procédé selon la revendication 4, dans lequel, après le premier temps et avant le deuxième temps, la vérification de l'au moins une image prise par la station de porte (2) est effectuée, dans lequel une image considérée comme défectueuse est transmise par la mémoire (5) au serveur de correction d'image (4) pour la réalisation de l'au moins une correction d'image.

6. Procédé selon la revendication 5, dans lequel, avant le deuxième temps, l'image corrigée est transmise par le serveur de correction d'image (4) à la mémoire (5) de l'installation de communication de porte (1).

7. Procédé selon l'une des revendications précédentes, dans lequel la transmission de l'image considérée comme défectueuse à un serveur de correction d'image (4) comprend la production d'un duplicata de l'image considérée comme défectueuse, qui est enregistré dans une mémoire (5) de l'installation de communication de porte (1), dans lequel le duplicata est remplacé dans la mémoire (5) par l'image corrigée après la transmission de l'image corrigée à la mémoire (5).

8. Procédé selon l'une des revendications précédentes, dans lequel la réalisation d'au moins une correction d'image comprend :
a. la détermination d'au moins une position d'un objet représenté sur l'image prise par la station de porte (2) ;
b. la détermination d'un écart entre la position et une position de consigne, de préférence un centre de l'image ; et
c. le suivi de la position de l'objet sur l'image en compensant l'écart, de façon à ce que l'objet adopte la position de consigne et soit centrée de préférence sur l'image.

9. Procédé selon l'une des revendications précédentes, dans lequel la réalisation d'au moins une correction d'image comprend la détermination d'une sur-exposition ou d'une sous-exposition de l'image, d'une perte de contraste ou d'une aberration chromatique et la réalisation d'une correction d'éclairage, d'une augmentation de contraste ou d'une correction chromatique.

10. Procédé selon l'une des revendications précédentes, dans lequel l'image prise par la station de porte (2) est transformée de manière réversible après la transmission par le serveur de correction d'image (4) et est enregistrée comme image transformée dans une mémoire (5) de l'installation de communication de porte (1).

11. Procédé selon la revendication 10, dans lequel la transformation de l'image comprend la détection d'une personne représentée sur l'image et la transformation réversible d'une zone de l'image représentant la personne.

12. Procédé selon la revendication 10 ou 11, dans lequel la transformation de l'image comprend la détection d'au moins une zone de l'image dans laquelle aucune personne n'est représentée, dans lequel cette zone reste non transformée lors de la transformation.

13. Procédé selon la revendication 11 ou 12, dans lequel la transformation de la zone représentant la personne comprend la superposition réversible de cette zone avec une image de remplacement, de préférence avec un avatar.

14. Procédé selon l'une des revendications 10 à 13, qui comprend une étape d'autorisation à la suite de laquelle l'image transformée de manière réversible est mise dans un état non transformé et affichée sur la station de porte (2) ou est enregistrée dans la mémoire (5) de l'installation de communication de porte (1) en tant qu'image non transformée pour un accès par l'intermédiaire de la station de porte (2).

15. Procédé selon l'une des revendications précédentes, dans lequel la transformation réversible de l'image prise par la station de porte (2) comprend la transmission de l'image prise par la station de porte (2) au serveur de correction d'image (4), la transformation de l'image par le serveur de correction d'image (4) et la retransmission de l'image transformée à l'installation de communication de porte (1).

16. Procédé selon l'une des revendications précédentes, dans lequel, de manière simultanée ou retardée dans le temps par rapport à l'envoi d'une demande d'établissement d'une liaison de communication visuelle, une demande d'identification est envoyée par l'intermédiaire d'une sortie, de préférence un écran (9), de la station de porte (2).
